(19) Europäisches Patentamt
European Patent Office
Office européen des brevets

(11) Veröffentlichungsnummer: **0 000 925**
**A1**

(12) **EUROPÄISCHE PATENTANMELDUNG**

(21) Anmeldenummer: **78100687.9**

(22) Anmeldetag: **17.08.78**

(51) Int. Cl.²: **C 07 C 61/18,** C 07 C 69/74,
C 07 C 51/15
// C07F3/02, A01N9/24

(30) Priorität: **18.08.77 AT 5977/77**

(43) Veröffentlichungstag der Anmeldung: **07.03.79**
**Patentblatt 79/5**

(84) Benannte Vertragsstaaten: **BE CH DE FR GB LU NL SE**

(71) Anmelder: **Studiengesellschaft Kohle mbH, Kaiser-Wilhelm-Platz 1, D-4330 Mülheim/Ruhr (DE)**

(72) Erfinder: **Lehmkuhl, Herbert, Prof. Dr., Leonard-Stinnes-Strasse 55, D-4330 Mulheim-Ruhr (DE)**
Erfinder: **Mehler, Klaus-Dieter, Scharpenberg 18, D-4330 Mülheim-Ruhr (DE)**
Erfinder: **Binger, Paul, Dr., Margarethenplatz 70, D-4330 Mülheim-Ruhr (DE)**

(74) Vertreter: **von Kreisler, Alek, Dipl.-Chem. et al, Deichmannhaus am Hauptbahnhof, D-5000 Köln 1 (DE)**

(54) **Verfahren zur Herstellung ungesättigter Cyclopropancarbonsäuren bzw. deren Ester.**

(57) Beschrieben wird ein Verfahren zur Herstellung ungesättigter Cyclopropancarbonsäuren bzw. deren Ester. Das neue Verfahren ermöglicht die Herstellung von 2,2-Dimethyl-3-alkenyl-cyclopropancarbonsäure bzw. ihren Estern derart, dass man 3,3-Dimethylcyclopropen mit Alkenylmagnesiumhalogenid und/oder Dialkenylmagnesiumverbindungen umsetzt, die gebildeten Additionsprodukte mit Kohlendioxid oder einem Chlorameisensäureester zur Reaktion bringt und das erhaltene Reaktionsprodukt hydrolysiert.

EP 0 000 925 A1

0000925

15. Aug. 1978

Studiengesellschaft Kohle mbH,
Kaiser-Wilhelm-Platz 1, 4330 Mülheim/Ruhr

Verfahren zur Herstellung ungesättigter Cyclopropancarbonsäuren bzw. deren Ester

Ester der 2,2-Dimethyl-3-alkenyl-cyclopropylcarbonsäure und im Alkylenrest substituierte Derivate sind wichtige Insektizide. Die bekanntesten Vertreter dieser Klasse sind die in den Blütenköpfen der Pyrethrum Chrysanthemum cinerariae folium aufgefundenen "pyrethrine", das sind Ester der Chrysanthemsäure, einer 2,2-Dimethyl-3(ß-methylpropenyl)cyclopropancarbonsäure.

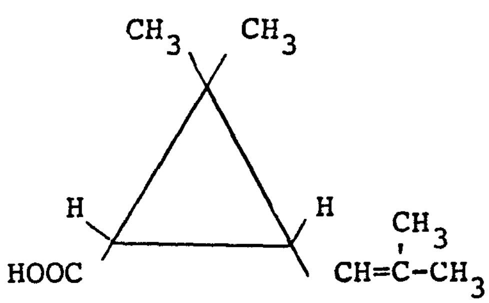

die in der cis- und der trans-Form auftreten kann.

In der Literatur sind mehrere Synthesen der Chrysanthemsäure oder deren Ester beschrieben. Da diese Synthesen über mehrere Zwischenstufen (6-11) verlaufen, sind die bekannten Verfahren sehr zeit- und kostenaufwendig und ergeben dann, bezogen auf Ausgangsstoffe, nur Ausbeuten von maximal 35 % (J. Ficini und J. d'Angelo, Tetrahedron Letters 1976, 2441; M. Matsui und M. Uchiyama, Agr. Biol. Chem. 26, 523 (1962); S.C. Welch und T.A. Valdes, J. Org. Chem. 42, 2108 (1977)).

Nach dem erfindungsgemäßen Verfahren lassen sich demgegenüber 2,2-Dimethyl-3-alkenylcyclopropancarbonsäuren bzw. deren Ester in guten Ausbeuten und hoher Reinheit aus den billigen Ausgangsstoffen Isobuten, Chloroform, Alkenylchlorid bzw. Butadien oder Isopren, Magnesium und Kohlendioxid bzw. Chlorameisensäureester gewinnen.

Das erfindungsgemäße Verfahren arbeitet mit 3,3-Dimethylcyclopropen als einem Ausgangsmaterial. 3,3-Dimethylcyclopropen ist in einem Dreistufenverfahren aus Chloroform und Isobuten in Ausbeuten von 50 bis 70 % erhältlich. Es wurde überraschend gefunden, daß sich Alkenylmagnesiumhalogenide und Dialkenyl- und Alkendiyl- sowie Alkadiendiyl-magnesiumverbindungen sehr leicht und in hohen Umsätzen an Dimethylcyclopropen addieren, siehe das folgende Reaktions-Schema 1. Die erhaltene Magnesiumverbindung läßt sich durch die bekannte Reaktion mit Kohlendioxid und anschließende Hydrolyse in hohen Ausbeuten in die entsprechenden 2,2-Dimethyl-3(Z)-alkenylcyclopropyl-carbonsäuren umwandeln (siehe bezüglich der $CO_2$-Reaktion von Organomagnesiumverbindungen: Houben-Weyl-Müller, Methoden der Organischen Chemie, Band 13/IIa, S. 247, Thieme-Verlag, Stuttgart 1973).

Anstatt mit Kohlendioxid können die Magnesiumverbindungen 2 auch in an sich bekannter Weise mit Chlorameisensäureäthylester oder anderen analogen Estern der Chlorameisensäure zu den entsprechenden Estern der Cyclopropancarbonsäuren umgesetzt werden (bezüglich der Reaktion von magnesiumorganischen Verbindungen mit Chlorameisensäureestern siehe Houben-Weyl-Müller, Methoden der Organischen Chemie, Band 13/IIa, S. 462, Thieme-Verlag, Stuttgart 1973)).

Schema 1

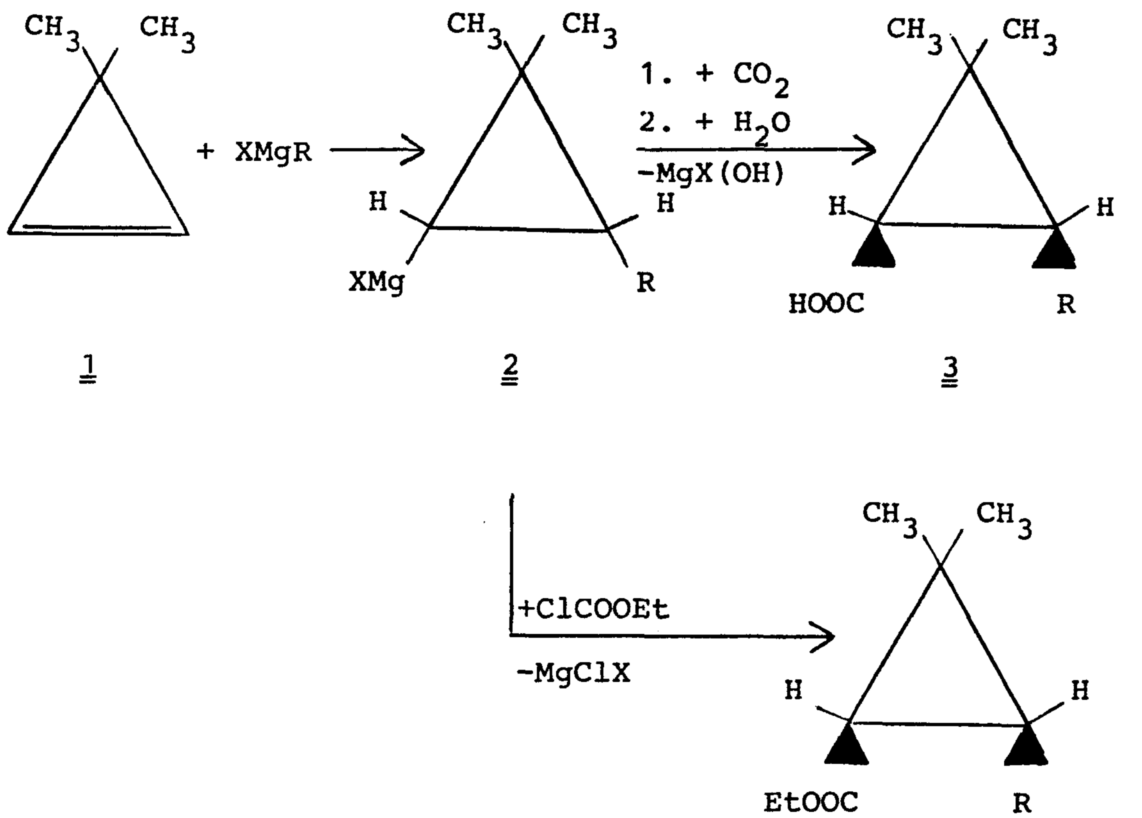


1 2 3

4

Hierzu gilt:

X = R, Cl, Br oder J

R = gradkettige oder verzweigte und dabei einfach oder mehrfach - z.B. zweifach oder dreifach - olefinisch ungesättigte Alkenyl-, Alkendiyl- oder Alkadiendiylgruppe mit vorzugsweise 2 bis 20 C-Atomen, insbesondere 2 bis 15 C-Atomen. Neben gradkettig oder verzweigten olefinischen Bestandteilen können auch cycloaliphatische oder aromatische Bestandteile in diesem Rest als Substituenten oder eingebaut in den Kettenverlauf des Substituenten vorliegen, wobei die Cyclohexylgruppe bevorzugt ist. Die olefinische Doppelbindung (en) kann (können) endständig oder auch an anderer Stelle des Restes vorliegen. Am Cyclopropanring vorliegende Reste R mit einer olefinischen Doppelbindung in ß-Stellung können besondere Bedeutung haben. Der Rest R kann damit die folgenden Bedeutungen haben:

1-Alkenyl, 2-Alkenyl, 3-Alkenyl, 4-Alkenyl usw., z.B.

$- CH=CH_2$

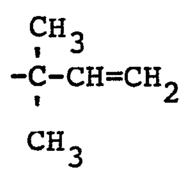

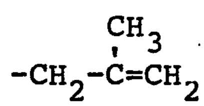

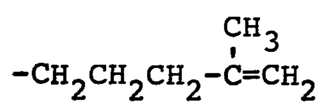

$-CH_2-CH=CH_2$

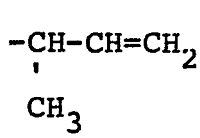

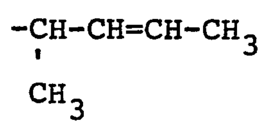

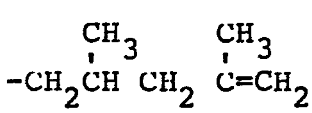

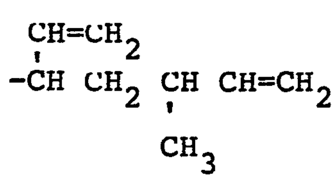

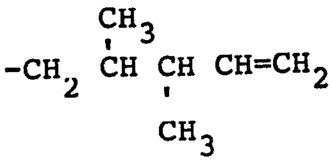

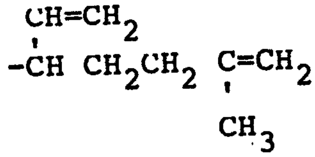

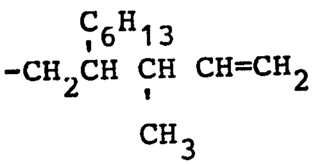

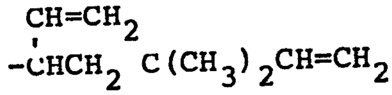

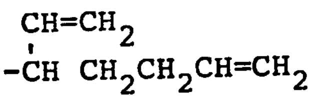

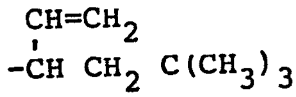

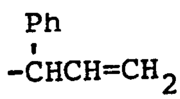

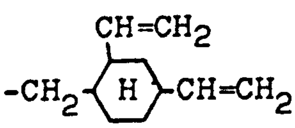

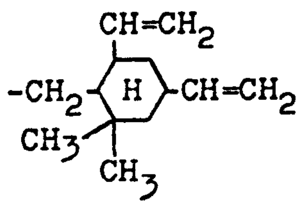

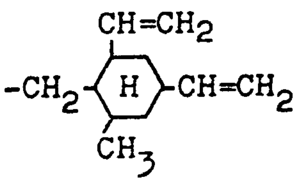

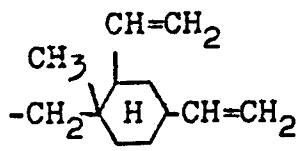

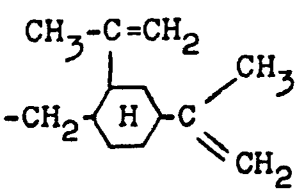

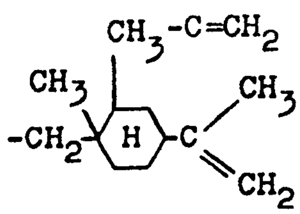

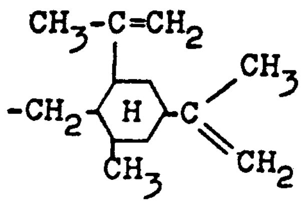

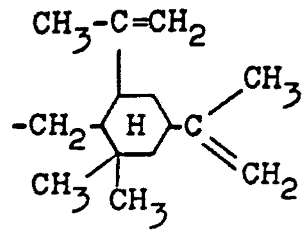

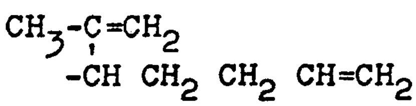

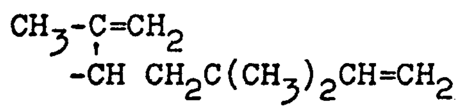

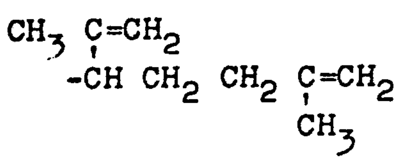

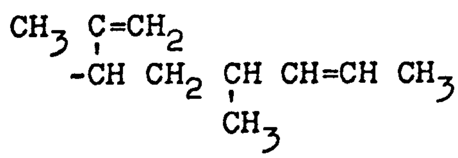

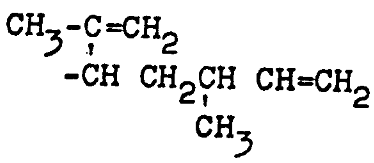

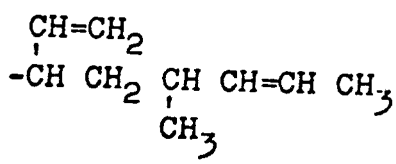

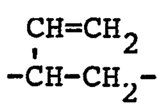

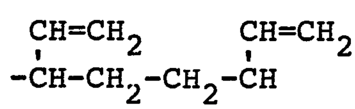

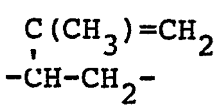

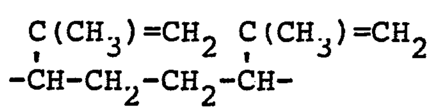

Gegenstand der Erfindung ist demgemäß ein Verfahren zur Herstellung von 2,2-Dimethyl-3-alkenyl-cyclopropancarbonsäuren bzw. ihren Estern, wobei das Verfahren dadurch gekennzeichnet ist, daß man 3,3-Dimethylcyclopropen mit Alkenylmagnesiumhalogenid und/oder Di-alkenylmagnesiumverbindungen umsetzt, das Reaktions-produkt mit Kohlendioxid oder einem Chlorameisensäure-Ester umsetzt und das jetzt angefallene Reaktionsprodukt hydrolysiert.

Die glatte Addition von Alkenylmagnesiumverbindungen an die C=C-Bindung im 3,3-Dimethylcyclopropen ist aus folgenden Gründen außerordentlich überraschend: Infolge des besonderen Bindungscharakters der Kohlenstoffatome der Doppelbindung im Cyclopropen wird eine Hybridisierung der C-Atome ähnlich der sp-Hybridisierung in Acetylenderivaten angenommen. Für die C-H-Bindungen an der Doppelbindung errechnet sich ein s-Charakter von 42 %, für 3,3-Dimethylcyclopropen kann aus $^{13}C$-Resonanzmessungen auf einen s-Charakter der C-H-Bindungen von 44 % geschlossen werden (siehe Houben-Weyl-Müller, Methoden der Organischen Chemie, Band 4/III, S. 679-681, Thieme-Verlag, Stuttgart, 1971); G.L. Closs, Proceedings Chem. Soc. 1962, 152, schreibt wörtlich:

> "Hinsichtlich der =C-H-Bindungen scheinen Cyclopropene den Acetylenen ähnlicher zu sein als Olefinen, ein Schluß, der seine chemische Berechtigung in der kürzlich beobachteten relativ großen Acidität dieser Protonen findet."

So beträgt der s-Charakter der C-H-Bindungen

im $CH \equiv CH$ 50 %,

im 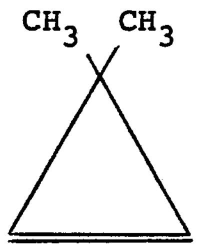 44 %.

und in $CH_2=CH_2$ nur 31 % (siehe Houben-Weyl-Müller, Band 4/III, S. 680).

Chemisch würde bedeuten, daß 3,3-Dimethylcyclopropen wie ein Alkin mit magnesiumorganischen Verbindungen nicht unter Addition an die C-C-Mehrfach-Bindung, sondern unter Ersatz des Wasserstoffs gegen Mg reagieren sollte. Tatsächlich haben russische Autoren (O.A Nesmeyanova, T.Yu. Rudaschevskaya und M.Yu. Lukina, Izv. Akad. Nauk SSSR 1965, 1510, engl. 1482) bei der Reaktion von 1,3,3-Trimethylcyclopropen mit Äthylmagnesiumbromid die Bildung von Äthan beobachtet

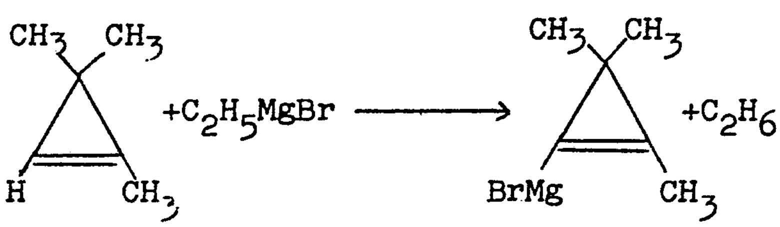

Das Cyclopropenderivat verhält sich damit sehr ähnlich den 1-Alkinen, die ebenfalls unter Äthanentwicklung und Substitution des Wasserstoffs durch Mg reagieren:

$$HC \equiv CC_4H_9 + C_2H_5MgBr \longrightarrow BrMgC \equiv CC_4H_9 + C_2H_6$$

1-Alkine sind dabei reaktionsträger als der Grundkörper, das Acetylen (siehe Houben-Weyl-Müller, Methoden der Organischen Chemie, Band 13/IIa, S. 136, Thieme-Verlag Stuttgart, 1973).

Ein ähnliches Verhalten wie Alkylmagnesiumhalogenide zeigen Alkenylmagnesiumhalogenide. So wurde gefunden, daß 2-Methyl-2-propenylmagnesiumchlorid mit 1-Hexin ausschließlich unter Substitution im Sinne folgender Reaktionsgleichung reagiert:

$$HC\equiv CC_4H_9 + ClMgCH_2\overset{CH_3}{\overset{|}{C}}=CH_2 \longrightarrow ClMgC\equiv CC_4H_9 + CH_2=C(CH_3)_2$$

Die russischen Autoren haben zwar in einer späteren Veröffentlichung mitgeteilt, daß bei der Reaktion von Alkylmagnesiumhalogeniden mit 1,3,3-Trimethylcyclopropen neben der Substitution unter Alkanentwicklung auch eine Addition der Organomagmesiumverbindung stattfindet (M. Yu. Lukina, T. Yu. Rudavshevskaya und O. A. Nesmeyanova, Dohlady Akad. Nauk SSSR 190, 1109 engl. 133). Beim Übergang vom 1,3,3-Trimethylcyclopropan zum 3,3-Dimethylcyclopropen war jedoch wie beim Übergang von einem Alkylacetylen zum Acetylen eine weitere Zunahme der Acidität des Wasserstoffs und damit ein Überhandnehmen der Substitutionsreaktion gegenüber der Addition zu erwarten, und zwar durch den induktiven Effekt der Methylgruppe. Beim Vergleich von Acetylen mit 1-Alkinen ist dieser Effekt nachgewiesen (siehe Houben-Weyl-Müller, Methoden der Organischen Chemie, Band 13/IIa, S. 136, 138, Thieme-Verlag).

Völlig überraschend unterbleibt die Substitutionsreaktion bei der Reaktion von 3,3-Dimethylcyclopropen mit Alkenylmagnesiumverbindungen. Bei der Hydrolyse der

Reaktionsprodukte wurden nur die entsprechenden 1-Alkenyl-2,2-dimethylcyclopropane und kein 3,3-Dimethylcyclopropen erhalten, das sich durch Hydrolyse des Substitutionsproduktes hätte zurückbilden sollen:

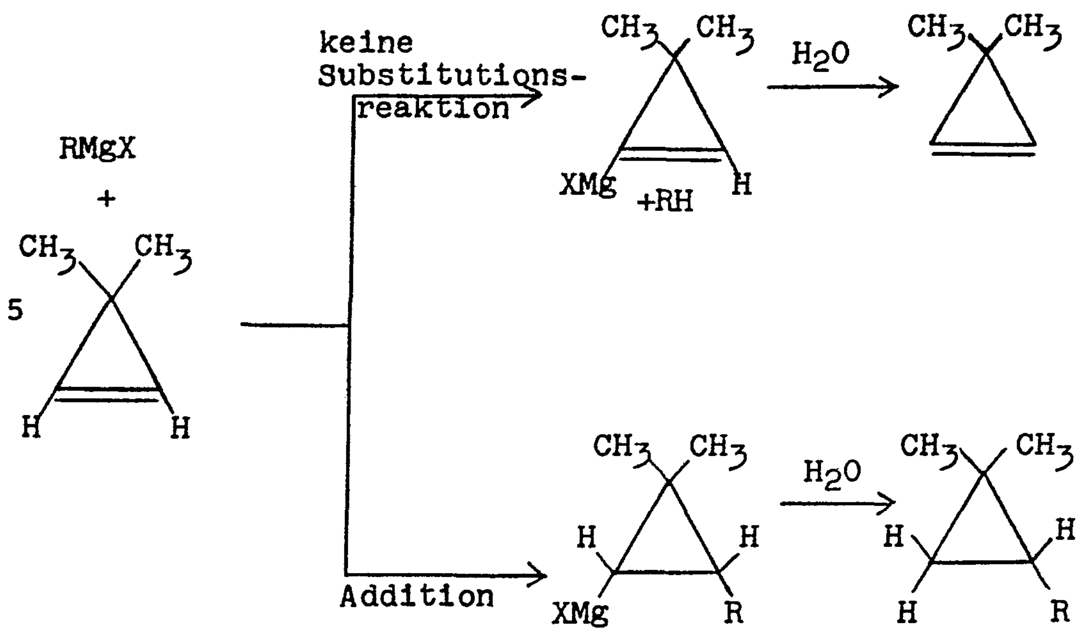


Die Addition der Organomagnesiumverbindung an Dimethylcyclopropen kann bei Temperaturen zwischen -20° und +100°C, vorzugsweise zwischen -10° und +40°C, in inerten Lösungsmitteln, z.B. aliphatischen oder aromatischen Kohlenwasserstoffen, z.B. Pentan, Hexan, Heptan, Benzol, Toluol oder in offenkettigen oder cyclischen Äthern, z.B. Dimethyl-, Diäthyl-, Diisopropyl- oder Dibutyläther, Tetrahydrofuran, Dimethyoxyäthan, Diglyme oder Dioxan, durchgeführt werden. Die Umsetzung der primär anfallenden Additionsprodukte mit $CO_2$ oder dem Chlorameisensäureester erfolgt in an sich bekannter Weise, siehe hierzu die zuvor zitierten Literaturstellen in Houben-Weyl-Müller, Band 13/IIa. Auch die abschließende Hydrolyse erfolgt in an sich bekannter Weise, z.B. bei Temperaturen von 0°C bis Raumtemperatur in wäßrig saurem Medium, vorzugsweise unter gleichzeitiger Auflösung des abgespaltenen Magnesiums als Salz in der wäßrigen Lösung. Alkendiylmagnesium und Alkadienylmagnesium reagieren trotz des Vorhandenseins zweier Mg-C-Bindungen im ungesättigten Rest überwiegend nur im Molverhältnis 1:1 mit Dimethylcyclopropan, z.B. polymeres, aus Butadien und Mg leicht zugängliches 2-Butendiylmagnesium:

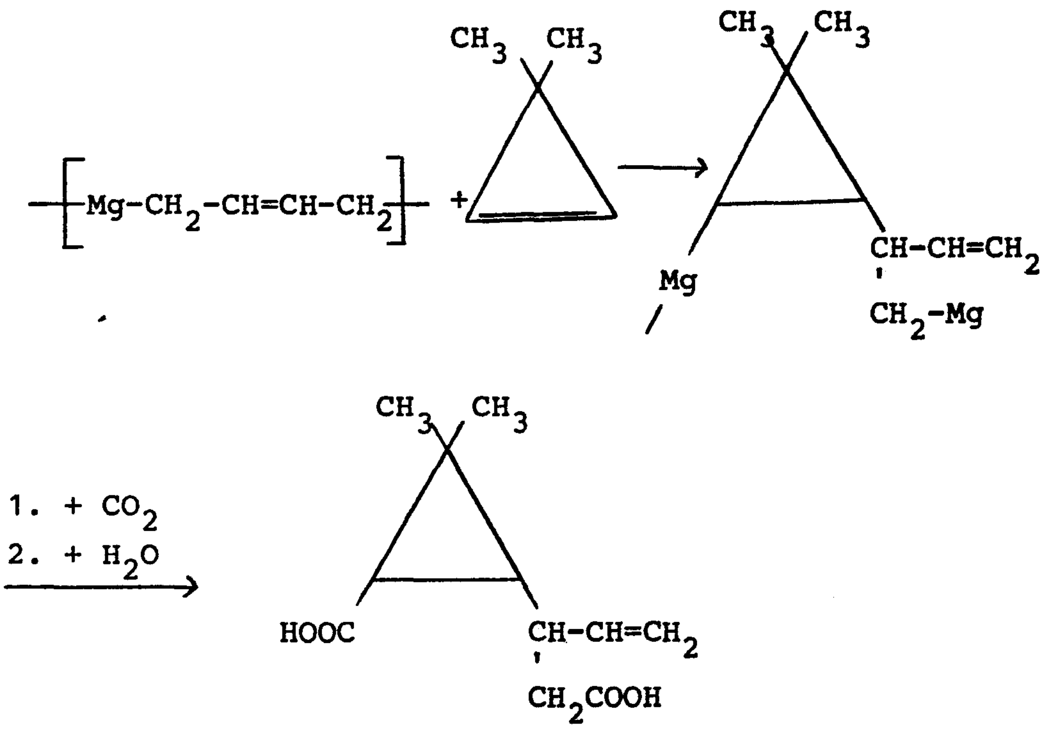


oder

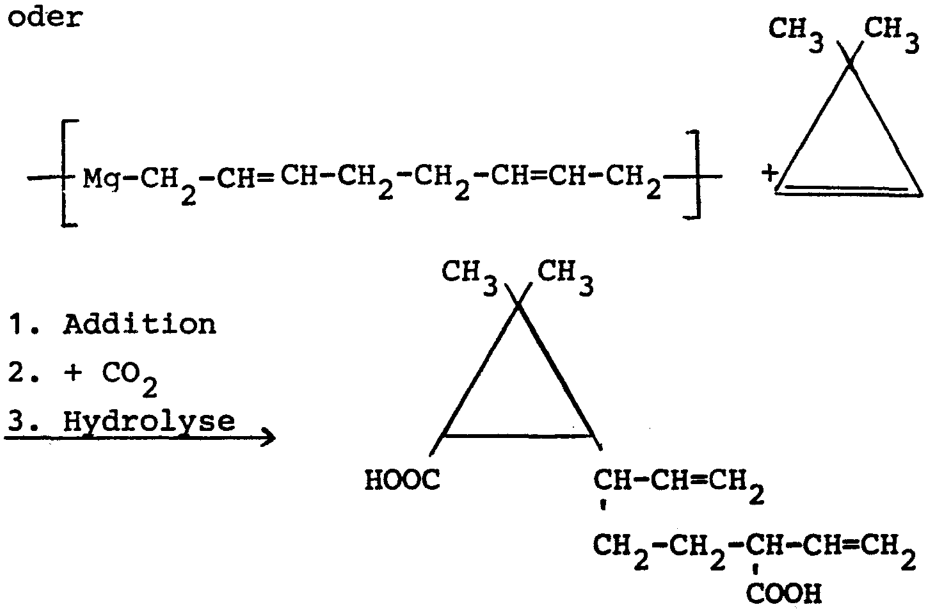

Das für die Synthese benötigte Dimethylcyclopropen kann auf einem einfachen Syntheseweg aus den leicht zugänglichen Ausgangsstoffen Isobuten und Chloroform in guten Ausbeuten erhalten werden. Das Syntheseprinzip ist in dem folgenden Schema 2 dargestellt:

Schema 2:

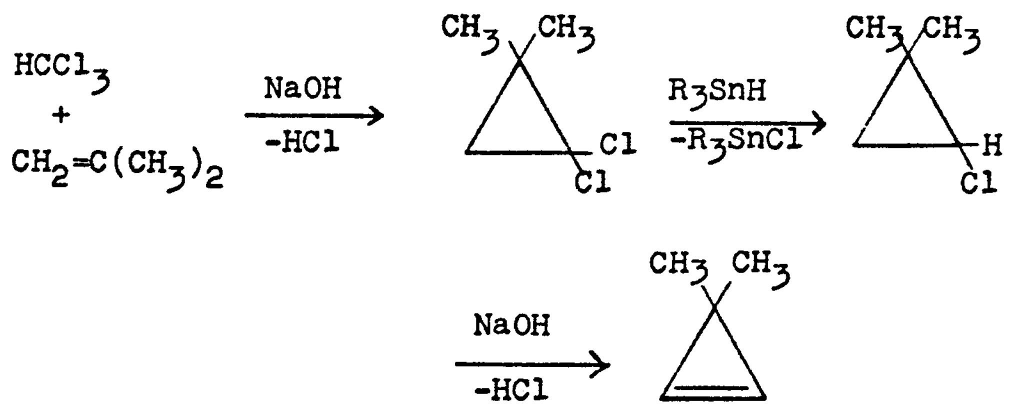


Durch Addition von Methallylmagnesiumchlorid an 3,3-Dimethylcyclopropen und anschließende Reaktion mit Kohlendioxid und Hydrolyse wird Cis-iso-Chrysanthemsäure in 67 % Ausbeute, durch Reaktion mit Chlorameisensäureester der Cis-iso-Chrysanthemsäureäthylester in $>$ 70 % Ausbeute rein erhalten.

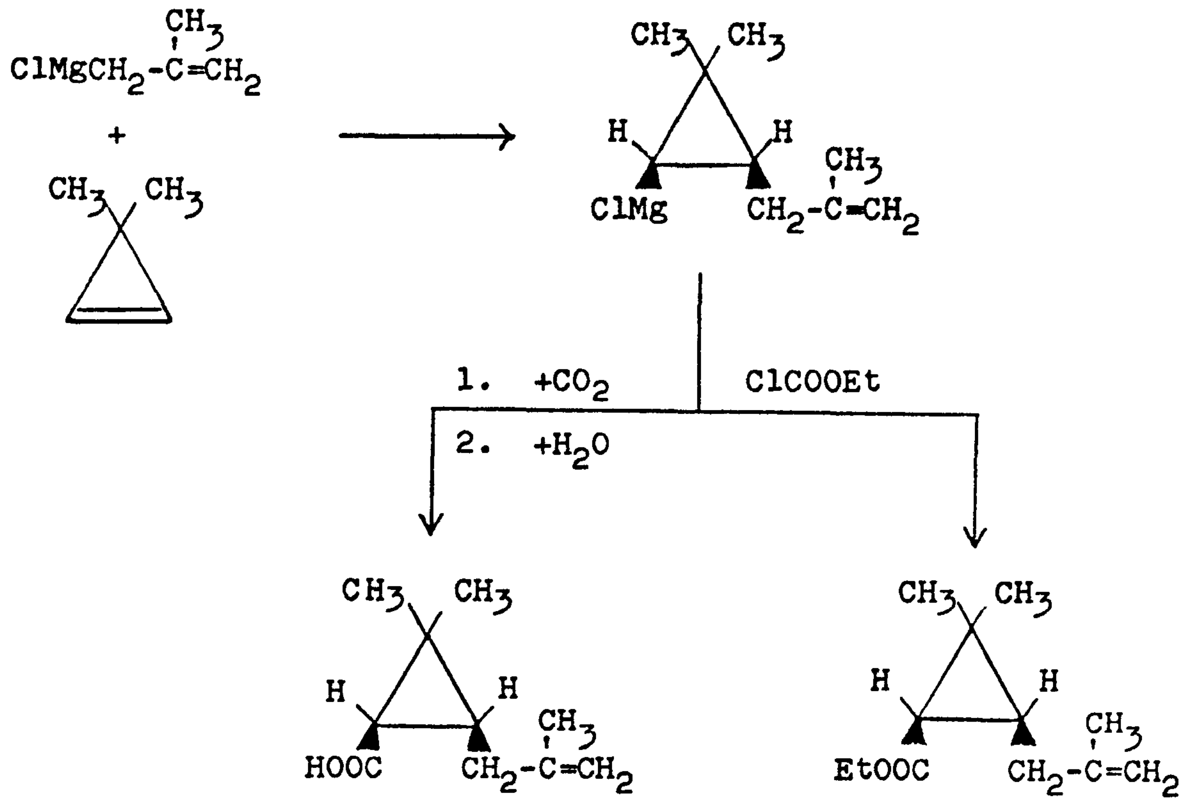


Durch Zugabe von einigen Tropfen Säure, z.B. konz. $H_2SO_4$ in Dioxan isomerisiert der Ester der Cis-iso-Chrysanthemsäure in den Äthylester der cis-Chrysanthemsäure. Erhitzt man den Äthylester der cis-Chrysanthemsäure mit einer Lösung von Natriumäthylat in Äthanol, so bildet sich quantitativ trans-Chrysanthemsäureäthylester.

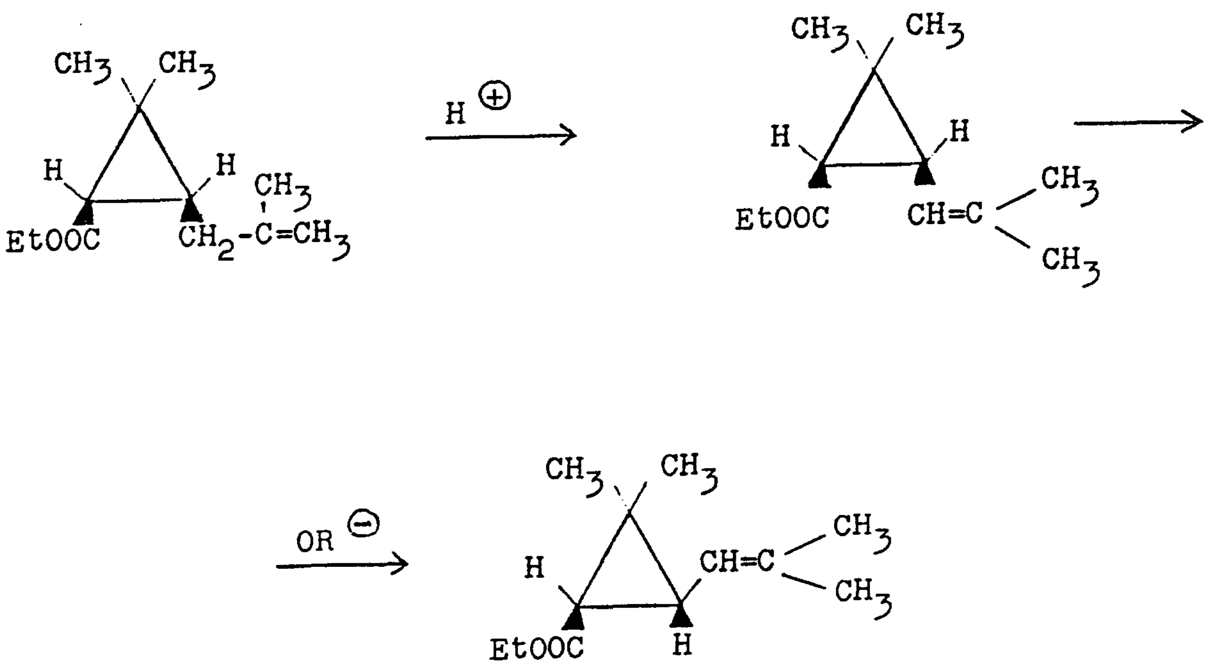


Durch Säurekatalyse können im erfindungsgemäßen Verfahren zunächst erhaltene Verbindungen mit ß-ständiger Doppelbindung dann zu Verbindungen mit α-ständiger Doppelbindung isomerisiert werden, wenn im primär erhaltenen Reaktionsprodukt noch mindestens ein Wasserstoffatom in α-Stellung vorhanden ist, z.B.

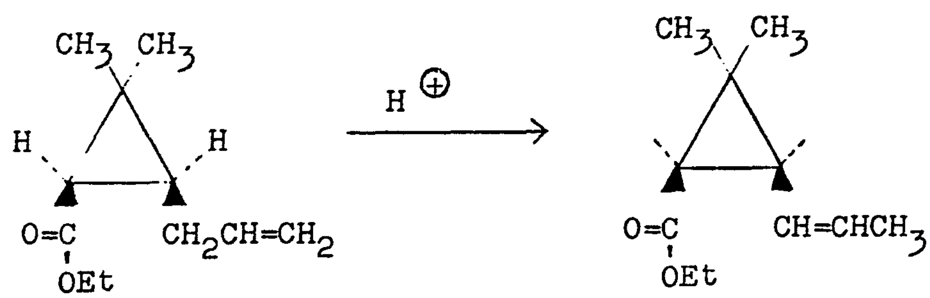


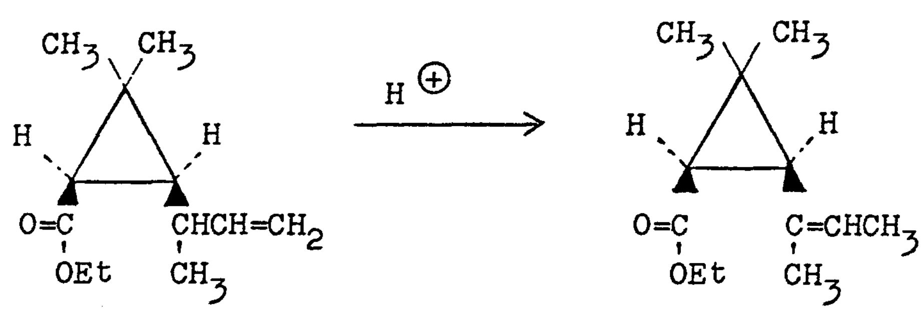

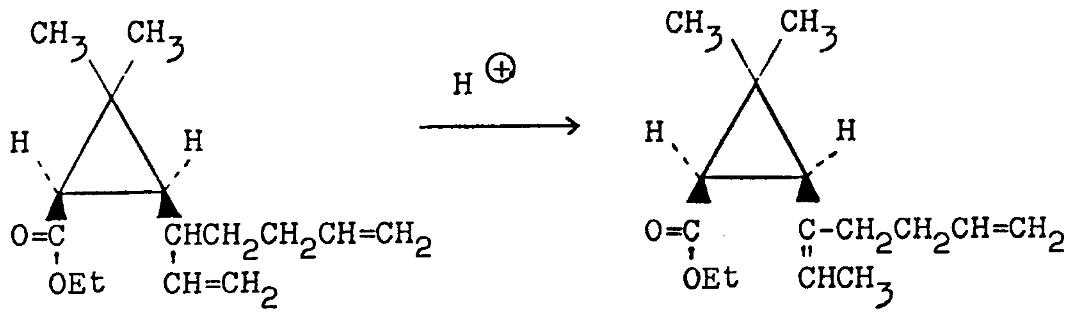

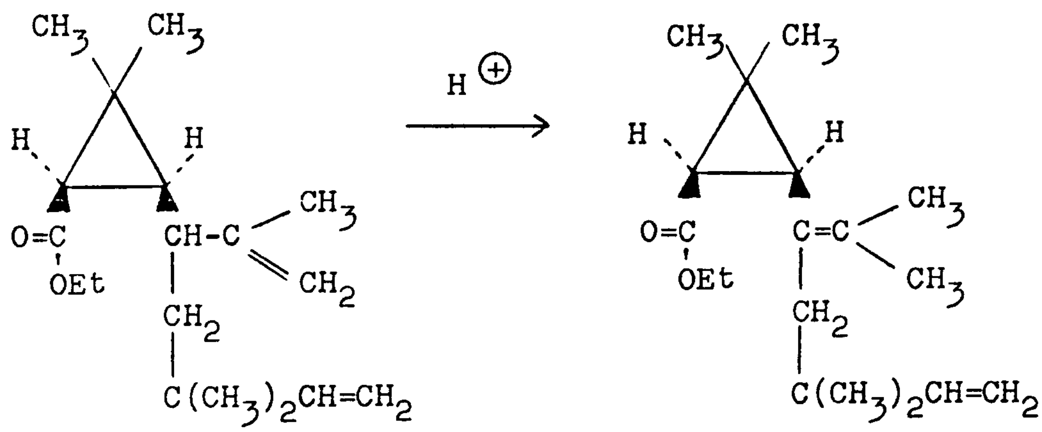

Aus 3,3-Dimethylcyclopropen und 2-Methyl-2-propenylmagnesiumchlorid können nach dem erfindungsgemäßen Verfahren wahlweise cis- oder trans-Chrysanthemsäure bzw. deren Ester in 60 bis 75 % Ausbeute erhalten werden.

Allgemeines Ausführungsbeispiel 1:

Zu einer etwa 1 bis 3 n Lösung der entsprechenden Alkenylmagnesiumverbindung in einem Äther wird eine äquivalente Menge 3,3-Dimethylcyclopropens in 40 ml des gewählten Lösungsmittels bei $0^{o}C$ unter Rühren innerhalb von 2 Std. getropft, anschließend läßt man auf Raumtemperatur erwärmen. Dann gießt man die Reaktionslösung auf festes Kohlendioxid, läßt wiederum erwärmen, säuert mit 1 n Salzsäure an, trennt die organische Phase ab, wäscht die Wasserphase nochmal mit wenig Äther nach. Zu den vereinigten Ätherphasen gibt man 50 ml 2 n Natronlauge, schüttelt gut durch und trennt die wäßrige Phase ab, überschichtet diese mit 50 ml Äther, gibt so lange 5 %ige Salzsäure zu, bis die Lösung sauer reagiert und äthert die wäßrige Phase mehrmals aus. Die vereinigten Ätherphasen werden über $Na_2SO_4$ getrocknet und fraktionierend destilliert.

Die in Tabelle 1 aufgefundenen Säuren werden in dieser Weise und mit den in der Tabelle angegebenen Reinheiten und Ausbeuten hergestellt.

Tabelle 1

Bedingungen, Ausbeuten und Reinheiten von 2,2-Dimethyl-3(Z)alkenylcyclopropancarbonsäuren

| | | | |
|---|---|---|---|
| Mg-Verbindung | | | |
| R | $-CH=CH_2$ | $-CH_2CH=CH_2$ | $-CH_2C(CH_3)=CH_2$ |
| X | Cl | Br | Cl |
| Lösungsmittel | THF | ÄTHER + | ÄTHER + |
| Cyclopropancarbonsäure | | | |
| R | $-CH=CH_2$ | $-CH_2CH=CH_2$ | $-CH_2C(CH_3)=CH_2$ |
| Kp $10^{-3}$ Torr | $66^o$ | $70^o$ | $79^o$ |
| Fp | $54^o$ | $49^o$ | $37^o$ |
| Ausbeute (%) | (32 rein) 37 | 62 | 67 |
| Reinheit | 99.6 | 99.2 | 99,95 |
| Molekulargewicht | 140 | 154 | 168 |
| Analysenwerte ( ) berechnet | | | |
| C | 68.7 (68.6) | 70.1 (70.1) | 71.4 (71.4) |
| H | 8.5 (8.6) | 8.9 (9.1) | 9.6 (9.5) |

+ Diäthyläther

Fortsetzung Tabelle 1

| | | | |
|---|---|---|---|
| Mg-Verbindung | | | |
| R | $-CH_2CH{=}CHCH_3$ | $-CH_2CH{=}C(CH_3)_2$ | $CH_3$<br>$-CH_2CH_2CH_2C{=}CH_2$ |
| X | Cl | Cl | Cl |
| Lösungsmittel | ÄTHER+ | ÄTHER+ | ÄTHER+ |
| Cyclopropan-carbonsäure | | | |
| R | $CH_3$<br>$-CHCH{=}CH_2$ | $CH_3$<br>$-C\ CH{=}CH_2$<br>$CH_3$ | $CH_3$<br>$-CH_2CH_2CH_2C{=}CH_2$ |
| Kp $10^{-3}$ Torr | 68-70° | 77° | 81° |
| Fp | 56° | 36° | flüssig |
| Ausbeute (%) | 51 | 51 | 60 |
| Reinheit | 99.8 | 99.6 | 95.4 |
| Molekulargewicht | 168 | 182 | 196 |
| Analysenwerte ( ) berechnet | | | |
| C | 71.5<br>(71.4) | 72.6<br>(72.5) | 73.6<br>(73.5) |
| H | 9.5<br>(9.5) | 9.9<br>(9.9) | 10.2<br>(10.2) |

+ Diäthyläther

Beispiel 2:

Cis-iso-Chrysanthemsäureäthylester:

Zu 125 mmol Methallylmagnesiumchlorid in 40 ml Diäthyläther wurden bei 0°C 8,5 g (125 mmol) 3,3-Dimethylcyclopropen in 40 ml Äther innerhalb von 2 Std. zugetropft. Anschließend ließ man unter Erwärmen der Reaktionsmischung bis auf 20°C nachrühren. Die Reaktionslösung wurde dann zu einer Lösung von 138 mmol Chlorameisensäureäthylester in 80 ml Äther innerhalb 2 Std. bei 20°C getropft. Bei 0°C wurden zunächst Wasser, dann 5 ml konz. Schwefelsäure zugesetzt und kräftig gerührt. Nach Abtrennen der ätherischen Phase wurde die wäßrige Phase nochmals mit Äther ausgeschüttelt, die vereinigten ätherischen Phase wurden mit Wasser gewaschen und über $Na_2SO_4$ getrocknet. Der Äther wurde über eine 50 cm Vigreux-Kolonne abdestilliert. Bei der anschließenden fraktionierenden Destillation wurden bei 43° bis 46°C/0.001 Torr 16,3gcis-iso-Chrysanthemsäureäthylester erhalten in 97 %iger Reinheit. Das gaschromatografische Retentionsverhalten und das $^1H$-NMR-Spektrum entsprechen dem einer authentischen Probe. Die Ausbeute betrug 65 %.

Beispiel 3:

Cis-Chrysanthemsäureäthylester:

1,5 g des nach Beispiel 2 erhaltenen cis-iso-Chrysanthemsäureesters wurden in 5 ml Dioxan mit 1 Tropfen konz. $H_2SO_4$ versetzt und 4 Std. auf 80°C erwärmt. Man erhielt cis-Chrysanthemsäureäthylester in 92 %iger Reinheit.

Beispiel 4:

24,3 g Magnesiumspäne (1 Mol) wurden in 200 ml THF suspendiert und durch Zugabe von 2 ml Äthylbromid aktiviert. Es wird auf 40 bis 50°C (Badtemperatur) aufgeheizt und eine Lösung von 108 g ( 2 Mol) Butadien in 200 ml THF in solchem Maße zugetropft, daß sich bei starkem Butadienrückfluß in einem auf -10°C gekühlten Kühler eine Innentemperatur von 30°bis 40°C einstellt (Zutropfgeschwindigkeit ca. 40 ml/Std.). Es entstand 2-Buten-1,4-diylmagnesium in Form einer breiigen Suspension eines hellgelben, in THF schwerlöslichen Feststoffes.

22,2 g (100 mMol) 2-Buten-1,4-diylmagnesium und 6,8 g (100 mMol) Dimethylcyclopropen wurden 24 Stunden in 60 ml THF bei 20 bis 22°C gerührt. Die Ausgangsmagnesiumverbindung ging während der ersten Stunden in Lösung, das Reaktionsprodukt fiel anschließend als gelber Niederschlag wieder aus. Bei 20°C/0,1 Torr wurde alles Flüchtige abgezogen, der Rückstand in 100 ml THF suspendiert und zu festem $CO_2$ im Überschuß gegeben. Nach Erwärmen auf 20°C wurde THF im Vakuum abgezogen, der rückbleibende Feststoff in Äther aufgeschlemmt und mit verdünnter Salzsäure hydrolysiert. Die entstandene Dicarbonsäure wurde mit siedendem Äther extrahiert. Vom Ätherextrakt wurde das Lösungsmittel abdestilliert, der zurückbleibende Feststoff mit Pentan gewaschen und filtriert. Man erhielt 10,5 g Dicarbonsäure folgender Struktur:

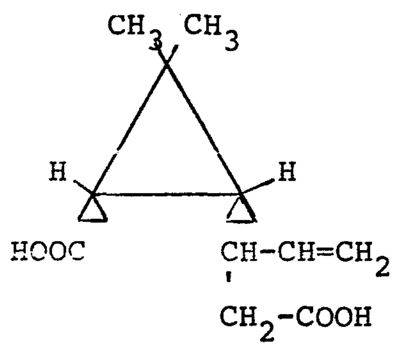

2,2-Dimethyl-3(Z)-[α(carboximethyl)-allyl]-cyclopropylcarbonsäure

Die Ausbeute betrug 49 %, Schmelzpunkt 173°C.

$C_{11}H_{16}O_4$ (212) C gef. 62,46 % Ber. 62,26 %
H gef. 7,64 % Ber. 7,55 %

Massenspektrum: $^m/e$ = kein $M^+$, 194 ($M^+$ - $H_2O$), 166, 152, 113, 95, 79, 67, 55, 41, 27.

1H-NMR (80 MHz, $D_8$-THF) : $\tau$= 4.20 (m, CH= ), 5.00 (m CH= <trans>, 5.15 (m, CH=<cis>), 6,88 (m, CH<Allyl>)
7,71 (α, $CH_2$), 8,52 (α, 1-CH; J ($H_1$ - $H_3$) = 9.0 Hz), 8,73 (s, $CH_3$) 8,87 (s, $CH_3$), 8,93 (m, 3-CH).

Beispiel 5:

Zu 50 mMol 2,6-Octadien-1,8-diylmagnesium in 30 ml THF ließ man bei 20°C 6,8 g (100 mMol) Dimethylcyclopropen in 30 ml THF während 2 Stunden unter Rühren zutropfen. Nach 60 Stunden Reaktionszeit wurde die Lösung mit weiteren 150 ml THF verdünnt, die THF-Lösung tropfte man zu festem $CO_2$ innerhalb 0,5 Stunden. Nach Erwärmen auf 20°C wurde bei 20°C/0,1 Torr alles Flüchtige abgezogen. Den zurückbleibenden farblosen Feststoff versetzte man mit 15 ml Eisessig und erwärmte auf 50°C. Nach Zugabe von 250 ml $H_2O$ wurde mehrmals mit Äther extrahiert und dann nach Phasentrennung der Äther abdestilliert. Zum sirupösen Rückstand wurden 200 ml Pentan gegeben, der ausfallende weiße Niederschlag abfiltriert und getrocknet. Man erhält 2,2 g 2,5-(Z)-Bis-(2,2-dimethyl-3-carboxidcyclopropyl)-1,7-octadien (Ausbeute 13,2 %)

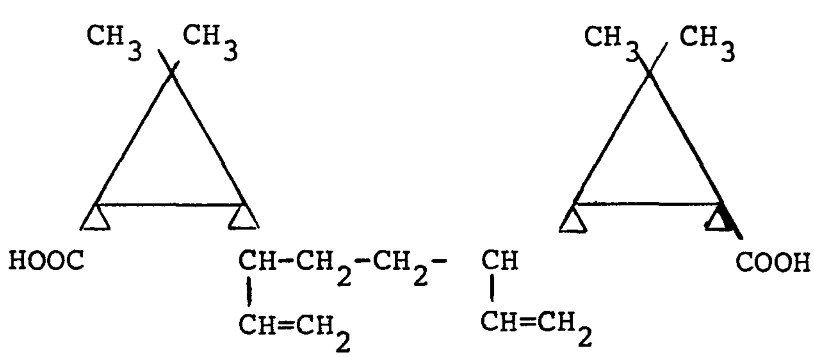

Aus der Addition beider Mg-C-Bindungen an Dimethylcyclopropan; Ausbeute 13,2 %.

| | | | |
|---|---|---|---|
| $C_{20}H_{30}O_4$ (334) | C gef. 71,76 % | ber. 71,85 % |
| Schmelzpunkt 283°C | H gef. 9,2 % | ber. 8,98 % |

Massenspektrum: $^m/e$ = kein $M^+$, 319 ($M^+$ $-CH_3$), 316 ($M^+$ $- H_2O$), 113.

$^1H$ - NMR (80 MHz, $D_8$ - THF) : τ = 0,1 (s, OH), 4,32 (m, CH=), 5,07 (m, CH=<trans>), 5,12 (m, CH=<cis>), 7,43 (m, CH< Allyl>), 8,58 (a, CH<C'propyl> , benachbart COOH), J ($H_1$ - $H_3$) = 9,0 Hz, 8,73 (s, $CH_3$), 8,87 (s, $CH_3$)

Das Pentanfiltrat wurde im Vakuum vom Lösungsmittel befreit, aus dem zurückbleibenden Sirup erhält man 8 g bei 175° bis 185°C/0,001 Torr übergehendes Destillat, das als

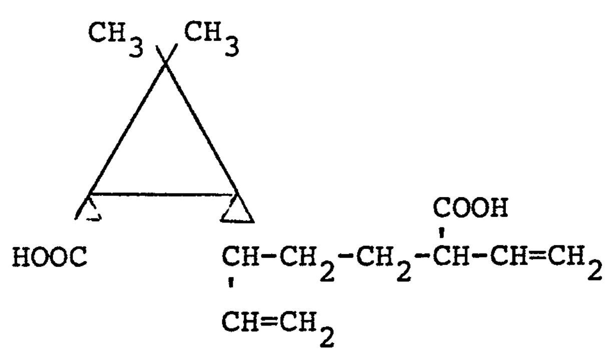

3-(2,2-dimethyl-3-carboxicyclopropyl)-octa-1,7-dien-6-carbonsäure

identifiziert wurde (Ausbeute: 60 %).

Massenspektrum (70 eV): $^m/e$ = kein $M^+$, 248 ($M^+$ $- H_2O$), 222 ($M^+$ $- CO_2$), 204, 113.

## Patentansprüche

1.) Verfahren zur Herstellung von 2,2-Dimethyl-3-alkenyl-cyclopropancarbonsäuren bzw. ihren Estern, dadurch gekennzeichnet, daß man 3,3-Dimethylcyclopropen mit Alkenylmagnesiumhalogenid und/oder Dialkenylmagnesium-Verbindungen umsetzt, die gebildeten Additionsprodukte mit Kohlendioxid oder einem Chlorameisensäureester zur Reaktion bringt und das erhaltene Reaktionsprodukt hydrolysiert.

2.) Verfahren nach Anspruch 1, dadurch gekennzeichnet, daß man die Addition der Alkenylmagnesiumverbindung an das 3,3-Dimethylcyclopropen bei Temperaturen von $-20^{o}$ bis $+100^{o}C$, vorzugsweise bei $-10^{o}$ bis $+40^{o}C$, durchführt und dabei zweckmäßigerweise die Reaktanten in einem inerten Lösungsmittel gelöst zur Umsetzung bringt.

3.) Verfahren nach Anspruch 1 und 2, dadurch gekennzeichnet daß man Alkenylmagnesiumverbindungen einsetzt, in denen der Alkenylrest einfach oder mehrfach olefinisch ungesättigt und dabei geradkettig oder verzweigt ist und vorzugsweise 2 bis 20, insbesondere 2 bis 15 C-Atome , aufweist, wobei als Dialkenylmagnesiumverbindungen insbesondere auch einfach oder mehrfach olefinisch ungesättigte Alkendiylmagnesiumverbindungen eingesetzt werden können.

4.) Verfahren nach Anspruch 1 bis 3, dadurch gekennzeichnet, daß man primär anfallende Umsetzungsprodukte mit einer olefinischen Doppelbindung in ß-Stellung des Alkenylrestes in an sich bekannter Weise zu entsprechenden Verbindungen mit α-ständiger olefinischer Doppelbindung isomerisiert und auf diese Weise insbesondere Reaktionsprodukte vom Typ der Chrysanthemsäure bzw. ihrer Ester gewinnt.

5.) Verfahren nach Anspruch 1 bis 4, dadurch gekennzeichnet, daß man die primär stereospezifisch in cis-Stellung anfallenden Reaktionsprodukte in an sich bekannter Weise zu Reaktionsprodukten mit trans-Stellung isomerisiert.

6.) Verfahren zur Herstellung von 2,2-Dimethyl-3-alkenylcyclopropancarbonsäuren der allgemeinen Formel

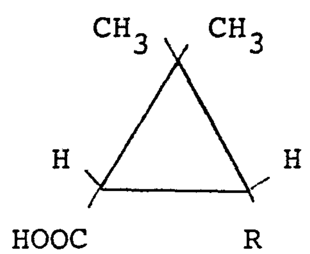

worin R eine gerade oder verzweigte Alkenyl- bzw. Alkendiyl- oder Alkadienyl- bzw. Alkadiendiylgruppe mit bis zu 20 C-Atomen bedeutet bzw. ihre Ester, dadurch gekennzeichnet, daß man 3,3-Dimethylcyclopropen mit einer Alkenyl-Magnesium-Verbindung der allgemeinen Formel RMgX bzw. MgRMg, worin R obige Bedeutung hat und X Chlor, Brom oder Jod darstellt oder die gleiche Bedeutung wie R hat, bei Temperaturen von $-20^{o}C$ bis $+100^{o}C$, vorzugsweise bei $-10^{o}$ bis $+40^{o}C$, zweckmäßig in einem inerten Lösungsmittel umsetzt, das gebildete Additionsprodukt mit Kohlendioxid oder einem Chlorameisensäureester zur Reaktion bringt und hierauf hydrolysiert, gegebenenfalls primär anfallende Umsetzungsprodukte mit einer olefinischen Doppelbindung in ß-Stellung der Alkenylgruppe zu entsprechenden in $\alpha$-Stellung ungesättigten Verbindungen und/oder die primär stereospezifisch in cis-Stellung anfallenden Reaktionsprodukte zu entsprechenden trans-Verbindungen isomerisiert.

Europäisches Patentamt

# EUROPÄISCHER RECHERCHENBERICHT

Nummer der Anmeldung
0000925
EP 78 10 0257

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | NL - A - 74 02879 (SHELL INTERNATIONALE RESEARCH MIJ.)<br>* Seite 1, Zeilen 1-5, 10-15; Seite 2, Zeilen 1-8, 18; Seite 3, Zeilen 15-22; Seite 4, Zeilen 1-5; Seite 2, Zeilen 9-14 *<br>-- | 1,2,3,<br>5, 6 |
| A | CHEMISTRY AND INDUSTRY (1976) no. 14, Seite 609<br>* Formule X *<br>-- | 1 |
| | FR - A - 1 396 649 (SUMITOMO CHEMICAL)<br>* Anspruch 1 *<br>-- | 5 |
| A | US - A - 3 810 949 (L.H.SHEPHERD)<br>* Zusammenfassung; Spalte 3,17; Beispiel 9 *<br>-- | 1 |
| D | METHODEN DER ORGANISCHEN CHEMIE Houben-Weyl-Müller Band 13/IIa Thieme Verlag, Stuttgart 1973<br>* Seiten 247-248,462 *<br>---- | 1 |

KLASSIFIKATION DER ANMELDUNG (Int.Cl.²)

C 07 C 61/18
C 07 C 69/74
C 07 C 51/15//
C 07 F 3/02
A 01 N 9/24

RECHERCHIERTE SACHGEBIETE (Int. Cl.²)

C 07 C 61/18
C 07 C 69/74
C 07 C 51/15

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 3-10-1978 | MME BONNEVALLE |